(19) Europäisches Patentamt / European Patent Office / Office européen des brevets

(11) **EP 2 914 497 B1**

(12) **FASCICULE DE BREVET EUROPEEN**

(45) Date de publication et mention
de la délivrance du brevet:
**14.09.2016 Bulletin 2016/37**

(21) Numéro de dépôt: **13783329.9**

(22) Date de dépôt: **25.10.2013**

(51) Int Cl.:
*B64G 1/32* (2006.01)     *B64G 1/36* (2006.01)
*G05D 1/08* (2006.01)     *G01L 5/22* (2006.01)
*G01L 3/10* (2006.01)     *G01L 5/00* (2006.01)
*B64G 1/24* (2006.01)

(86) Numéro de dépôt international:
**PCT/EP2013/072345**

(87) Numéro de publication internationale:
**WO 2014/067856 (08.05.2014 Gazette 2014/19)**

(54) **PROCÉDÉ DE COMMANDE DE MAGNÉTO-COUPLEURS D'UN SYSTÈME DE CONTRÔLE D'ATTITUDE D'UN VÉHICULE SPATIAL**

VERFAHREN ZUM STEUERN VON MAGNETISCHEN DREHMOMENTERZEUGERN EINES LAGEREGELUNGSSYSTEMS EINES RAUMFAHRZEUGES

METHOD OF CONTROLLING MAGNETIC TORQUERS OF AN ATTITUDE CONTROL SYSTEM OF A SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2012 FR 1202923**

(43) Date de publication de la demande:
**09.09.2015 Bulletin 2015/37**

(73) Titulaire: **Airbus Defence and Space SAS
78130 Les Mureaux (FR)**

(72) Inventeur: **MORO, Valerio
F-31000 Toulouse (FR)**

(74) Mandataire: **Ipside
6, Impasse Michel Labrousse
31100 Toulouse (FR)**

(56) Documents cités:
**EP-A1- 1 308 813     EP-A1- 1 357 451
US-B1- 7 376 496**

**Description**

**DOMAINE TECHNIQUE**

La présente invention appartient au domaine du contrôle d'attitude de véhicules spatiaux, tels que des satellites en orbite autour de la Terre. Plus particulièrement, la présente invention concerne un procédé de commande de magnéto-coupleurs mis en oeuvre pour dé-saturer un dispositif de stockage de moment angulaire d'un système de contrôle d'attitude.

**ÉTAT DE LA TECHNIQUE**

Un système de contrôle d'attitude d'un satellite en orbite autour de la Terre comporte généralement un dispositif de stockage de moment angulaire afin d'absorber les effets de couples perturbateurs externes agissant sur ledit satellite (comme ceux induits par la traînée atmosphérique résiduelle, par la pression de radiation solaire, etc.).

De manière conventionnelle, un tel dispositif de stockage de moment angulaire comporte des actionneurs inertiels (gyroscopes, roues de réaction, etc.) mis en oeuvre pour créer des couples de contrôle d'attitude dont les effets compensent les effets des couples perturbateurs externes.

Du fait que les effets des couples perturbateurs externes se cumulent au cours du temps, le moment angulaire du dispositif de stockage augmente progressivement au cours du temps, jusqu'à éventuellement saturer le dispositif de stockage, c'est-à-dire jusqu'à atteindre la capacité maximale dudit dispositif de stockage.

Afin d'éviter toute saturation du dispositif de stockage, des couples sont appliqués de manière récurrente au satellite afin de dé-saturer le dispositif de stockage par transfert de moment angulaire.

Pour dé-saturer le dispositif de stockage de moment angulaire, il est par exemple connu d'utiliser des magnéto-coupleurs.

Les magnéto-coupleurs sont des actionneurs qui permettent de créer des couples magnétiques en coopération avec un champ magnétique externe, cf. US 7 376 496. De tels magnéto-coupleurs sont mis en oeuvre généralement dans les systèmes de contrôle d'attitude de satellites en orbite basse autour de la Terre, le champ magnétique terrestre étant alors utilisé par les magnéto-coupleurs pour former les couples magnétiques.

Toutefois, à un instant donné et quelle que soit la configuration des magnéto-coupleurs, il n'est physiquement pas possible de former des couples magnétiques dans la direction du champ magnétique externe local.

En d'autres termes, à un instant donné, les magnéto-coupleurs ne peuvent dé-saturer le dispositif de stockage que suivant au plus deux axes, dans un plan orthogonal au champ magnétique externe local, dit « plan de contrôle local ». Une dé-saturation du dispositif de stockage suivant le troisième axe pourra cependant être effectuée ultérieurement si la direction du champ magnétique externe varie au cours du temps par rapport au dispositif de stockage, l'orientation du plan de contrôle local des magnéto-coupleurs variant également au cours du temps par rapport audit dispositif de stockage.

**EXPOSÉ DE L'INVENTION**

La présente invention a pour objectif de proposer une solution qui permette plus généralement d'améliorer les performances du contrôle d'attitude d'un véhicule spatial au moyen de magnéto-coupleurs, et qui permette en particulier d'améliorer les performances de la dé-saturation du système de stockage de moment angulaire.

En outre, la présente invention a pour objectif de proposer une solution qui soit simple et peu coûteuse à mettre en oeuvre, applicable y compris dans des systèmes de contrôle d'attitude de véhicules spatiaux qui sont déjà à poste en orbite autour de la Terre.

A cet effet, et selon un premier aspect, l'invention concerne un procédé de commande de magnéto-coupleurs d'un système de contrôle d'attitude d'un véhicule spatial soumis à un champ magnétique externe de direction variable, lesdits magnéto-coupleurs étant mis en oeuvre pour contrôler l'attitude dudit véhicule spatial et étant adaptés à former, en coopération avec le champ magnétique externe local, des couples magnétiques dans un plan orthogonal à la direction dudit champ magnétique externe local, dit « plan de contrôle local ». Le procédé comporte notamment des étapes de :

- mesure du champ magnétique externe local,
- détermination d'un couple magnétique à former dans le plan de contrôle local en fonction d'un couple de contrôle d'attitude souhaité suivant trois axes,
- commande des magnéto-coupleurs de sorte à former, en coopération avec le champ magnétique externe local, le couple magnétique déterminé.

En outre, le procédé de commande est caractérisé en ce que le couple magnétique à former dans le plan de contrôle local est déterminé en fonction de la composante du couple de contrôle d'attitude souhaité qui est orthogonale au plan de contrôle local, dite « composante localement incontrôlable », la contribution de ladite composante localement incontrôlable au couple magnétique à former étant non nulle lorsque ladite composante localement incontrôlable est non nulle.

Par « local », on entend dans toute la présente demande « au niveau du véhicule spatial à l'instant considéré ».

Il est en outre à noter que, par « couple de contrôle d'attitude souhaité », on entend également, en particulier pour des systèmes de contrôle d'attitude échantillonnés, une variation souhaitée de moment angulaire $\Delta H$ pendant un intervalle de temps $\Delta T$, le couple de contrôle d'attitude souhaité étant dans ce cas égal à $\Delta H/\Delta T$.

La composante localement incontrôlable du couple de contrôle d'attitude souhaité correspond à la composante qui est suivant la direction du champ magnétique externe local, sur laquelle les magnéto-coupleurs ne peuvent pas agir. Il est à noter que, du fait que les magnéto-coupleurs ne peuvent pas agir sur ladite composante localement incontrôlable, celle-ci est, dans tous les procédés de commande de magnéto-coupleurs connus, systématiquement ignorée lors de la détermination du couple magnétique à former dans le plan de contrôle local. En d'autres termes, dans l'art antérieur, l'action effectuée par les magnéto-coupleurs à un instant donné ne prend en compte que la composante du couple de contrôle d'attitude souhaité située dans le plan de contrôle local,

Contrairement à ce qui est effectué dans les procédés de commande de l'art antérieur, la composante localement incontrôlable du couple de contrôle d'attitude souhaité est, selon l'invention, prise en compte pour déterminer le couple magnétique à former dans le plan de contrôle local.

En effet, il a été constaté que, bien que localement inopérante et contrairement aux préjugés de l'homme de l'art, la prise en compte de la composante localement incontrôlable permettait d'améliorer les performances du contrôle d'attitude suivant trois axes au cours du temps, en particulier les performances de la dé-saturation suivant trois axes lorsque lesdits magnéto-coupleurs sont mis en oeuvre pour dé-saturer un dispositif de stockage de moment angulaire.

Pour mettre en oeuvre un procédé de commande selon l'invention, une modification logicielle des procédés de commande de l'art antérieur sera généralement suffisante. Ainsi, un procédé de commande selon l'invention pourra être mis en oeuvre y compris dans les satellites déjà à poste et équipés de moyens de mise à jour logicielle à distance.

Dans des modes particuliers de mise en oeuvre, le procédé de commande peut comporter en outre l'une ou plusieurs des caractéristiques suivantes, prises isolément ou selon toutes les combinaisons techniquement possibles.

Dans un mode particulier de mise en oeuvre, la contribution de la composante localement incontrôlable du couple de contrôle d'attitude souhaité au couple magnétique à former dans le plan de contrôle local est déterminée en outre en fonction d'un modèle de variation temporelle de la direction du champ magnétique externe.

De telles dispositions sont avantageuses en ce que la prise en compte d'un modèle de variation temporelle de la direction du champ magnétique externe par rapport au véhicule spatial permet d'augmenter et de contrôler la bande passante de contrôle, de sorte qu'il est possible d'avoir un contrôle d'attitude suivant trois axes plus réactif qu'avec les procédés de commande de l'art antérieur. Par exemple, dans le cas d'une dé-saturation d'un dispositif de stockage de moment angulaire, l'excursion en moment angulaire du dispositif de stockage liée aux couples perturbateurs externes pourra être diminuée, et il sera possible de considérer des dispositifs de stockage de capacité maximale inférieure à celle requise pour les dispositifs de stockage de l'art antérieur.

Dans un mode particulier de mise en oeuvre, le véhicule spatial évoluant dans un plan orbital, la détermination du couple magnétique à former comporte l'expression de la variation souhaitée de moment angulaire dans un repère magnétique centré sur le véhicule spatial et défini par trois axes X, Y, Z : un axe X parallèle à la direction du champ magnétique externe local, un axe Y orthogonal à l'axe X et se trouvant dans un plan orthogonal au plan orbital, et un axe Z orthogonal aux axes X et Y.

De telles dispositions sont avantageuses en ce que, dans le repère magnétique, la loi de contrôle, suivant laquelle le couple magnétique à former est déterminé, pourra être exprimée de manière particulièrement simple.

Dans un mode particulier de mise en oeuvre, le couple magnétique à former est déterminé, dans le repère magnétique, suivant une loi de contrôle s'exprimant sous la forme :

$$\mathbf{T}mag = -\begin{bmatrix} 0 & 0 & 0 \\ 0 & Ky & 0 \\ Kzx & 0 & Kz \end{bmatrix} \cdot \frac{\mathbf{T}cmd}{Kn}$$

expression dans laquelle :

- Tmag correspond au couple magnétique à former,
- Tcmd correspond au couple de contrôle d'attitude souhaité,
- Kn est un paramètre scalaire non nul homogène à une fréquence,

- Kzx, Ky et Kz sont des paramètres scalaires non nuls ou des fonctions de transfert non nulles homogènes à des fréquences.

Dans un mode particulier de mise en oeuvre, le véhicule spatial étant en orbite polaire autour de la Terre, le paramètre scalaire Kzx s'exprime sous la forme :

$$Kzx = 2 \cdot \omega_0 \cdot \left( \left( \frac{\omega_{CL}}{2 \cdot \omega_0} \right)^2 - 1 \right)$$

expression dans laquelle :

- $\omega_0$ correspond à la fréquence orbitale du véhicule spatial,
- $\omega_{CL}$ correspond à la bande passante de dé-saturation souhaitée.

Dans un mode particulier de mise en oeuvre, le système de contrôle d'attitude comportant un dispositif de stockage de moment angulaire, les magnéto-coupleurs sont mis en oeuvre pour dé-saturer ledit dispositif de stockage par transfert de moment angulaire.

Dans un mode particulier de mise en oeuvre, le couple de contrôle d'attitude souhaité s'exprime sous la forme :

$$\mathbf{T}cmd = Kn \cdot \Delta \mathbf{H}$$

expression dans laquelle :

- $\mathbf{T}$cmd correspond au couple de contrôle d'attitude souhaité,
- Kn est un paramètre scalaire non nul homogène à une fréquence,
- $\Delta \mathbf{H}$ correspond à une variation souhaitée du moment angulaire du dispositif de stockage.

Selon un second aspect, l'invention concerne un produit programme d'ordinateur comportant un ensemble d'instructions de code de programme qui, lorsqu'elles sont exécutées par un processeur, mettent en oeuvre un procédé de commande de magnéto-coupleurs selon l'invention.

Selon un troisième aspect, l'invention concerne un système de contrôle d'attitude d'un véhicule spatial selon la revendication 9, destiné à être soumis à un champ magnétique externe de direction variable, ledit système de contrôle d'attitude comportant un dispositif de mesure du champ magnétique externe local, un dispositif de stockage de moment angulaire et des magnéto-coupleurs.

Dans des modes particuliers de réalisation, le système de contrôle d'attitude peut comporter en outre l'une ou plusieurs des caractéristiques suivantes, prises isolément ou selon toutes les combinaisons techniquement possibles.

Dans un mode particulier de réalisation, le dispositif de mesure est adapté à mesurer le champ magnétique externe local suivant trois axes.

Dans un mode particulier de réalisation, les magnéto-coupleurs sont adaptés à former des moments magnétiques suivant trois axes.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de contrôle d'attitude d'un satellite,
- Figure 2 : un diagramme illustrant les principales étapes d'un procédé de commande de magnéto-coupleurs,
- Figure 3 : une représentation schématique du champ magnétique terrestre local auquel est soumis un satellite en orbite polaire, pour différentes positions dudit satellite sur son orbite polaire,
- Figures 4a à 4c : des résultats de simulation illustrant l'amélioration des performances obtenue avec l'invention.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

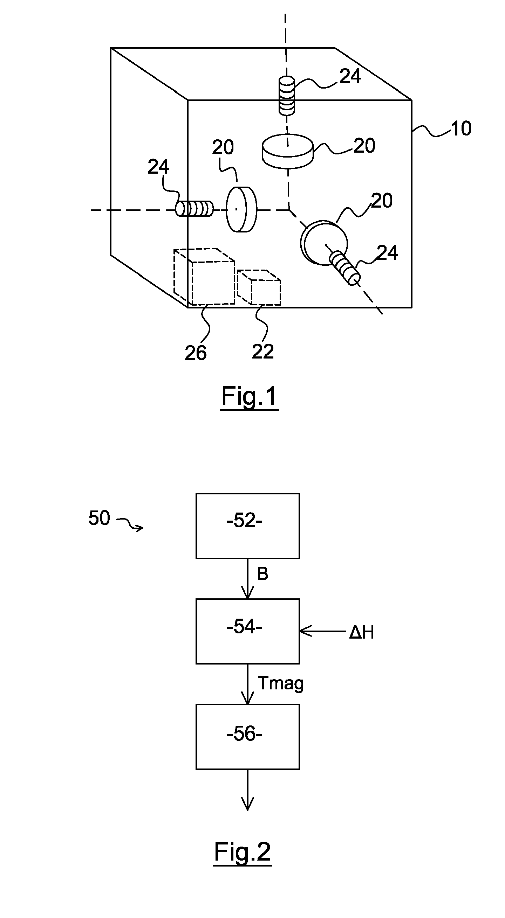

La figure 1 représente un mode particulier de réalisation d'un système de contrôle d'attitude de véhicule spatial, tel qu'un satellite 10, destiné à être soumis à un champ magnétique externe de direction variable.

Dans la suite de la description, on se place dans le cas d'un satellite 10 destiné à être placé en orbite basse autour de la Terre 40, le champ magnétique externe correspondant alors au champ magnétique terrestre.

Dans l'exemple illustré par la figure 1, le système de contrôle d'attitude comporte :

- un dispositif de stockage 20 de moment angulaire,
- un dispositif de mesure 22 du champ magnétique terrestre local,
- des magnéto-coupleurs 24,
- une unité de commande 26.

En pratique, le système de contrôle d'attitude peut comporter également d'autres éléments, qui sortent du cadre de l'invention et qui ne sont pas représentés sur les figures.

Dans l'exemple illustré par la figure 1, le dispositif de stockage 20 est adapté à stocker des moments cinétiques suivant trois axes. Ledit dispositif de stockage comporte à cet effet trois roues de réaction d'axes de vecteurs unitaires respectifs linéairement indépendants.

Le dispositif de mesure 22 est de préférence adapté à mesurer le champ magnétique terrestre local suivant trois axes, et permet de déterminer à la fois la direction et la norme du champ magnétique terrestre local. Le dispositif de mesure 22 peut être de tout type connu de l'homme de l'art.

Dans l'exemple illustré par la figure 1, les magnéto-coupleurs 24 sont adaptés à former des moments magnétiques suivant trois axes. A cet effet, le système de contrôle d'attitude comporte trois magnéto-coupleurs 24 d'axes de vecteurs unitaires respectifs linéairement indépendants.

Le moment magnétique total $\mathbf{M}$ créé par les magnéto-coupleurs 24 permet de former, en coopération avec le champ magnétique terrestre local $\mathbf{B}$, un couple magnétique $\mathbf{M} \wedge \mathbf{B}$, expression dans laquelle l'opérateur « $\wedge$ » correspond au produit vectoriel. On comprend donc que, à un instant donné, les magnéto-coupleurs 24 ne peuvent créer des couples magnétiques que dans un plan, dit « plan de contrôle local », qui est orthogonal à la direction du champ magnétique terrestre local $\mathbf{B}$.

Les magnéto-coupleurs 24 sont mis en oeuvre pour dé-saturer le dispositif de stockage 20 par transfert de moment angulaire. Tel qu'indiqué précédemment, les magnéto-coupleurs 24 ne peuvent, à un instant donné, dé-saturer le dispositif de stockage 20 que suivant deux axes. Toutefois, si la direction du champ magnétique terrestre varie au cours du temps par rapport au dispositif de stockage 20, une dé-saturation du dispositif de stockage 20 suivant le troisième axe pourra être réalisée ultérieurement.

L'unité de commande 26 contrôle l'attitude du satellite 10, et pilote à cet effet, notamment, le dispositif de stockage 20, le dispositif de mesure 22 et les magnéto-coupleurs 24.

En particulier, l'unité de commande 26 comporte des moyens configurés pour commander les magnéto-coupleurs 24 conformément à un procédé 50 de commande dont un exemple est décrit en détail ci-après. Ces moyens se présentent par exemple sous la forme d'un processeur et d'une mémoire électronique dans laquelle est mémorisé un produit programme d'ordinateur, sous la forme d'un ensemble d'instructions de code de programme qui, lorsqu'elles sont exécutées par le processeur, mettent en oeuvre tout ou partie des étapes du procédé 50 de commande des magnéto-coupleurs 24. Dans une variante, l'unité de commande 26 comporte des circuits logiques programmables, de type FPGA, PLD, etc., et/ou des circuits intégrés spécialisés (ASIC), adaptés à mettre en oeuvre tout ou partie des étapes dudit procédé 50 de commande des magnéto-coupleurs 24.

La figure 2 représente les principales étapes d'un procédé 50 de commande des magnéto-coupleurs 24 pour former des couples magnétiques de dé-saturation du dispositif de stockage 20, lesquelles sont :

- 52 mesure du champ magnétique terrestre local $\mathbf{B}$ par l'intermédiaire du dispositif de mesure 22,
- 54 détermination d'un couple magnétique à former dans le plan de contrôle local des magnéto-coupleurs 24 en fonction d'une variation souhaitée de moment angulaire pour le dispositif de stockage 20,
- 56 commande des magnéto-coupleurs 24 de sorte à former, en coopération avec le champ magnétique terrestre local $\mathbf{B}$, le couple magnétique déterminé.

Lesdites principales étapes du procédé 50 de commande, illustrées par la figure 2, sont itérées au cours du temps, afin notamment de tenir compte des variations du champ magnétique terrestre induites par exemple par le déplacement du satellite 10 en orbite autour de la Terre 40. Ainsi, en itérant lesdites étapes au cours du temps, une dé-saturation suivant trois axes du dispositif de stockage 20 peut être effectuée.

Selon l'invention, le couple magnétique à former dans le plan de contrôle local est déterminé en fonction de la composante de la variation souhaitée de moment angulaire qui est orthogonale au plan de contrôle local, dite « composante localement incontrôlable », la contribution de ladite composante localement incontrôlable au couple magnétique à former étant non nulle lorsque ladite composante localement incontrôlable est non nulle.

Ainsi, le couple magnétique formé dans le plan de contrôle local dépend de la composante localement incontrôlable de la variation souhaitée de moment angulaire, quand bien même il n'est pas possible d'agir sur celle-ci à l'instant considéré.

Afin d'illustrer l'amélioration des performances de la dé-saturation pouvant être obtenue grâce à la prise en compte de la composante localement incontrôlable dans le couple magnétique formé, on décrit à présent un mode préféré de mise en oeuvre de procédé 50 de commande. Dans ce mode préféré de mise en oeuvre, la contribution de la composante localement incontrôlable est en outre déterminée en fonction d'un modèle de variation de la direction du champ magnétique terrestre.

Afin de simplifier l'expression de la loi de contrôle suivant laquelle le couple magnétique à former est déterminé en fonction de la variation souhaitée de moment angulaire, on se place avantageusement dans un repère dans lequel la direction du champ magnétique terrestre est invariante au cours du temps, dit « repère magnétique » Rmag.

De manière générale, le repère magnétique Rmag est centré sur le satellite 10, et est défini par trois axes X, Y, Z dont l'un est parallèle à la direction du champ magnétique terrestre local **B**. Par exemple, l'axe X est parallèle à ladite direction du champ magnétique terrestre local **B**, l'axe Y est orthogonal à l'axe X et se trouve dans un plan orthogonal au plan orbital du satellite 10, et l'axe Z est orthogonal aux axes X et Y.

Dans la suite de la description, on se place en outre de manière non limitative dans le cas d'un satellite 10 en orbite polaire 30, et dans le cas où les vecteurs unitaires des axes X, Y et Z du repère magnétique Rmag, désignés respectivement par **x, y** et **z** sont définis comme suit :

- $x = b$, expression dans laquelle **b** représente le champ magnétique terrestre local **B** après normalisation,
- $z = x \wedge (-n_{ORB})$, expression dans laquelle $n_{ORB}$ représente la normale orbitale, c'est-à-dire le vecteur orthogonal au plan orbital et tel que le sens de rotation du satellite 10 dans le plan orbital orienté par ladite normale orbitale $n_{ORB}$ est positif,
- $y = z \wedge x$.

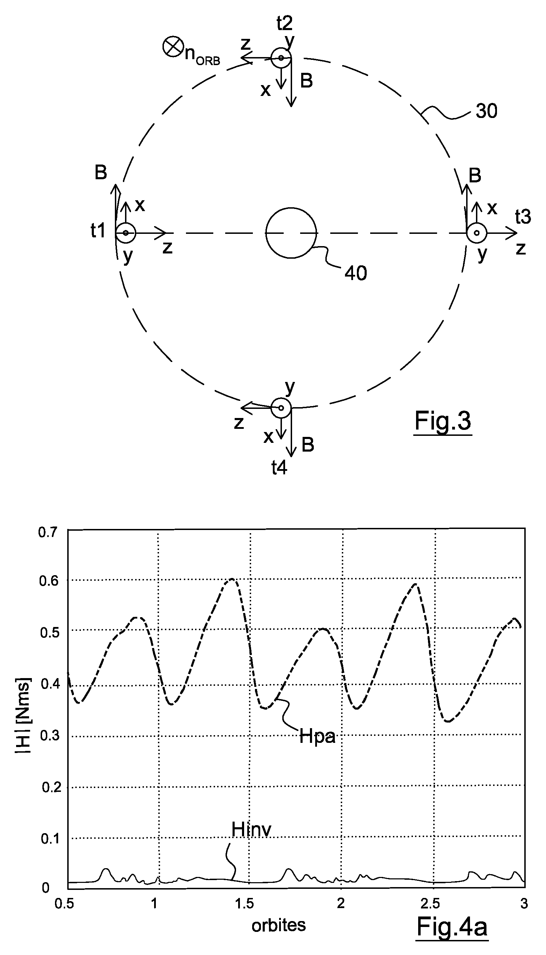

La figure 3 représente schématiquement l'orbite polaire 30 du satellite 10 autour de la Terre 40, ainsi que le champ magnétique terrestre local **B** à des instants différents t1, t2, t3 et t4 de ladite orbite polaire 30. Les instants t1 et t3 correspondent aux passages du satellite 10 par le plan équatorial de la Terre 40, tandis que les instants t2 et t4 correspondent au survol des pôles respectivement Nord et Sud de la Terre 40. La figure 3 représente également le repère magnétique Rmag auxdits instants t1 à t4.

Tel qu'illustré par la figure 3, la direction du champ magnétique terrestre tourne dans le plan orbital deux fois plus vite que le satellite 10 autour de la Terre 40, dans le sens positif défini par la normale orbitale $n_{ORB}$.

Ainsi, si on désigne par $\omega_0$ la fréquence orbitale du satellite 10, c'est-à-dire la vitesse de rotation du satellite 10 autour de la Terre 40, alors la vitesse de rotation de la direction du champ magnétique terrestre dans un repère inertiel est en moyenne égale à $2\omega_0$. Cette rotation s'effectuant dans le sens positif autour de la normale orbitale $n_{ORB}$, un exemple de modèle de variation de la direction du champ magnétique terrestre, considéré ci-après, peut par conséquent être exprimé sous la forme d'un vecteur $\Omega_{M/I}$ égal à :

$$\Omega_{M/I} = 2\omega_0 \cdot n_{ORB}$$

De manière connue, on a dans un repère inertiel la variation du moment angulaire total qui est égale à la somme des couples externes. Dans le cas présent, cela peut s'exprimer sous la forme suivante :

$$\dot{H} = Tmag + Tdist \qquad (e1)$$

expression dans laquelle :

- $\dot{H}$ correspond à la dérivée temporelle du moment angulaire total **H,**
- **T**mag correspond au couple magnétique formé,
- **T**dist correspond au couple perturbateur externe.

En tenant compte de la vitesse de rotation du repère magnétique Rmag dans le repère inertiel, l'expression (e1) devient dans le repère magnétique Rmag :

$$\mathbf{H} = -\mathbf{\Omega}_{M/I} \wedge \mathbf{H} + \mathbf{T}mag + \mathbf{T}dist \qquad (e2)$$

L'expression (e2) peut également être exprimée sous la forme :

$$\begin{bmatrix} \dot{H}x \\ \dot{H}y \\ \dot{H}z \end{bmatrix} = \begin{bmatrix} 2\omega_0 \cdot Hz \\ 0 \\ -2\omega_0 \cdot Hx \end{bmatrix} + \mathbf{T}mag + \mathbf{T}dist \qquad (e3)$$

expression dans laquelle Hx, Hy, Hz sont les composantes du moment angulaire total **H** dans le repère magnétique Rmag.
Le couple magnétique Tmag à former est par exemple calculé suivant la loi de contrôle suivante :

$$\mathbf{T}mag = -\mathbf{K} \cdot \mathbf{\Delta H} \qquad (e4)$$

expression dans laquelle :

- **K** est une matrice de contrôle,
- $\Delta$**H** est la variation souhaitée de moment angulaire, de composantes $\Delta$Hx, $\Delta$Hy et $\Delta$Hz dans le repère magnétique Rmag.

Dans un mode préféré de mise en oeuvre, la matrice de contrôle **K** prend la forme suivante :

$$\mathbf{K} = \begin{bmatrix} 0 & 0 & 0 \\ 0 & Ky & 0 \\ Kzx & 0 & Kz \end{bmatrix}$$

expression dans laquelle Kzx, Ky et Kz sont des paramètres scalaires non nuls homogènes à des fréquences.
Les coefficients de la première ligne de la matrice de contrôle **K** sont tous nuls, du fait qu'il n'est pas possible de former de couple magnétique suivant l'axe X du repère magnétique Rmag, qui correspond à la direction du champ magnétique terrestre local **B.** Le paramètre Kzx détermine la contribution de la composante localement incontrôlable $\Delta$Hx de la variation souhaitée $\Delta$**H** de moment angulaire au couple magnétique **T**mag à former.
Dans la suite de la description, on se place de manière non limitative dans le cas où la variation souhaitée $\Delta$**H** de moment angulaire est égale au moment angulaire total **H,** de sorte que les composantes $\Delta$Hx, $\Delta$Hy et $\Delta$Hz sont égales respectivement aux composantes Hx, Hy et Hz.
Par conséquent, l'expression (e3) peut également être exprimée sous la forme :

$$\begin{cases} \dot{H}x = 2\omega_0 \cdot Hz + Tx \\ \dot{H}y = -Ky \cdot Hy + Ty \\ \dot{H}z = -(2\omega_0 + Kzx) \cdot Hx - Kz \cdot Hz + Tz \end{cases} \qquad (e5)$$

expression dans laquelle Tx, Ty, Tz sont les composantes du couple perturbateur externe **T**dist dans le repère magnétique Rmag
Il est à noter que, dans le repère magnétique Rmag considéré, l'axe Y ne varie pas au cours du temps, ce qui est confirmé par l'expression de la variation du moment angulaire total liée à la vitesse de rotation du repère magnétique Rmag dans le repère inertiel, à savoir $\Omega_{M/I} \wedge$ **H.**
Par contre, on constate que les variations suivant l'axe X et l'axe Z sont couplées. En dérivant l'expression de la composante Hz et en remplaçant la composante Hx par son expression, on obtient :

$$\ddot{H}z + Kz \cdot \dot{H}z + 2\omega_0 \cdot (2\omega_0 + Kzx) \cdot Hz = 0 \qquad (e6)$$

A titre de comparaison, les lois de contrôle selon l'art antérieur reviennent à considérer, lorsqu'exprimées dans le repère magnétique Rmag, une matrice de contrôle **K**pa du type :

$$\mathbf{K}pa = \begin{bmatrix} 0 & 0 & 0 \\ 0 & Kaa & 0 \\ 0 & 0 & Kaa \end{bmatrix}$$

expression dans laquelle Kaa est un paramètre scalaire non nul. De la sorte, l'expression (e6) devient pour les lois de contrôle selon l'art antérieur :

$$\ddot{H}z + Kaa \cdot \dot{H}z + (2\omega_0)^2 \cdot Hz = 0 \qquad (e7)$$

Il apparaît par conséquent que le rôle du paramètre Kaa est de fournir un amortissement à un oscillateur linéaire du second ordre de fréquence $2\omega_0$. Ainsi, il n'est pas possible selon l'art antérieur de contrôler la fréquence dudit oscillateur linéaire du second ordre, de sorte que la bande passante maximale de dé-saturation est $2\omega_0$.

A contrario, on constate à partir de l'expression (e6) qu'il est possible de contrôler la bande passante de dé-saturation grâce au paramètre Kzx. Par exemple, pour obtenir une bande passante $\omega_{CL}$ de dé-saturation et un amortissement $\zeta$, les paramètres Kz et Kzx peuvent être :

$$Kz = 2 \cdot \zeta \cdot \omega_{CL} \qquad (e8)$$

$$Kzx = 2\omega_0 \cdot \left( \left( \frac{\omega_{CL}}{2\omega_0} \right)^2 - 1 \right) \qquad (e9)$$

Ainsi, selon l'invention, il est possible d'augmenter par rapport à l'art antérieur la bande passante de dé-saturation, et de contrôler ladite bande passante de dé-saturation en tenant compte du modèle de variation de la direction du champ magnétique terrestre (vitesse de rotation $2\omega_0$ de la direction du champ magnétique terrestre).

Les figures 4a à 4c représentent des résultats de simulation illustrant l'amélioration des performances obtenue avec l'invention.

Plus particulièrement, sur ces figures, le moment angulaire total **H**inv du dispositif de stockage 20 obtenu dans le cas d'une dé-saturation avec l'invention (matrice de contrôle **K** ci-dessus) est comparé au moment angulaire total **H**pa obtenu dans le cas d'une dé-saturation selon l'art antérieur (matrice de contrôle **K**pa ci-dessus).

La figure 4a représente l'évolution, au cours du temps (exprimé en nombre d'orbites), du moment angulaire total **H**inv et du moment angulaire total **H**pa. On constate que le moment angulaire total **H**inv obtenu avec l'invention est très inférieur au moment angulaire total **H**pa obtenu selon l'art antérieur.

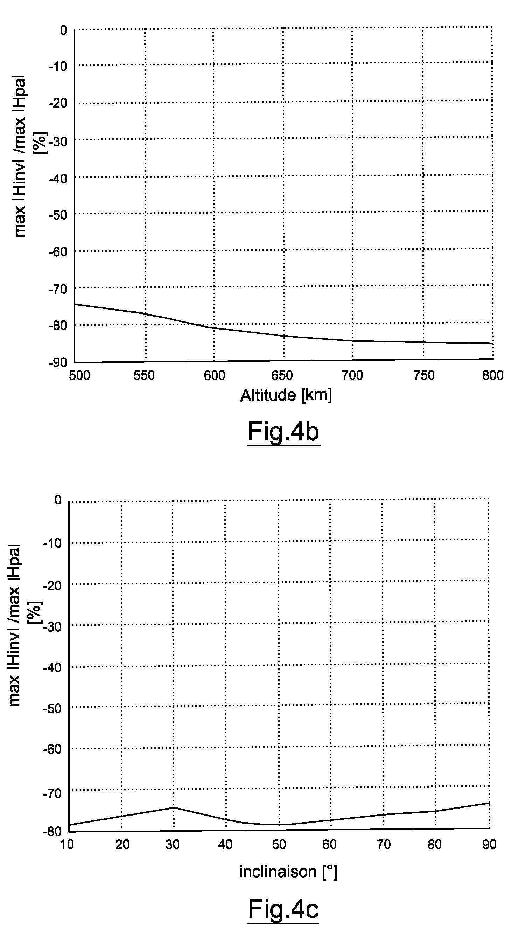

La figure 4b représente l'évolution, en fonction de l'altitude de l'orbite du satellite 10, du rapport entre :

- la valeur maximale (pire cas) du moment angulaire total **H**inv obtenu avec l'invention,
- la valeur maximale (pire cas) du moment angulaire total **H**pa obtenu selon l'art antérieur.

On constate que l'invention permet d'obtenir, dans une plage d'altitudes comprises entre 500 kilomètres et 800 kilomètres, une réduction supérieure à 70% du moment angulaire total du dispositif de stockage 20.

La figure 4c représente l'évolution, en fonction de l'inclinaison de l'orbite du satellite 10, du rapport entre :

- la valeur maximale (pire cas) du moment angulaire total **H**inv obtenu avec l'invention,

- la valeur maximale (pire cas) du moment angulaire total **H**pa obtenu selon l'art antérieur.

On constate que l'invention permet d'obtenir, dans une plage d'inclinaisons comprises entre 10 degrés et 90 degrés, une réduction supérieure à 70% du moment angulaire total du dispositif de stockage 20.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant des magnéto-coupleurs 24 mis en oeuvre pour dé-saturer un dispositif de stockage 20 de moment angulaire d'un système de contrôle d'attitude d'un satellite 10. L'invention est applicable plus généralement au cas d'une mise en oeuvre desdits magnéto-coupleurs pour contrôler l'attitude dudit satellite 10, c'est à dire pour dé-saturer un dispositif de stockage 20 de moment angulaire et/ou pour contrôler directement l'attitude dudit satellite 10 (en formant un couple magnétique adapté à maintenir l'attitude du satellite 10 autour d'une consigne d'attitude). De manière plus générale, le couple magnétique à former est donc déterminé en fonction d'un couple de contrôle d'attitude souhaité suivant trois axes, désigné par **T**cmd, visant à dé-saturer le dispositif de stockage 20 et/ou à contrôler directement l'attitude du satellite 10. En particulier, le couple magnétique à former est déterminé en fonction de la composante incontrôlable dudit couple de contrôle d'attitude souhaité. Les expressions ci-avant restent valables en remplaçant la variation souhaitée Δ**H** de moment angulaire par l'expression suivante :

$$\Delta H = \frac{Tcmd}{Kn}$$

expression dans laquelle :

- **T**cmd correspond au couple de contrôle d'attitude souhaité,
- Kn est un paramètre scalaire non nul homogène à une fréquence.

En outre, l'invention a été décrite en considérant un dispositif de stockage 20 comportant des roues de réaction. Rien n'exclut, suivant d'autres exemples, de considérer un dispositif de stockage 20 comportant d'autres types d'actionneurs inertiels adaptés à stocker du moment angulaire et à être dé-saturés au moyen de magnéto-coupleurs. Notamment, le dispositif de stockage 20 peut comporter des gyroscopes.

En outre, l'invention a été décrite en considérant pour la matrice de contrôle **K** des paramètres scalaires Kzx, Ky et Kz. Rien n'exclut suivant d'autres exemples de considérer des matrices de contrôle plus complexes, dans lesquelles ces paramètres scalaires seraient par exemple remplacés par des fonctions de transfert visant notamment à filtrer les bruits de mesure et/ou visant à tenir compte d'un modèle plus précis de la variation de la direction du champ magnétique terrestre.

## Revendications

1. Procédé (50) de commande de magnéto-coupleurs (24) d'un système de contrôle d'attitude d'un véhicule spatial (10) soumis à un champ magnétique externe de direction variable, lesdits magnéto-coupleurs étant mis en oeuvre pour contrôler l'attitude dudit véhicule spatial et étant adaptés à former, en coopération avec le champ magnétique externe local, des couples magnétiques dans un plan orthogonal à la direction dudit champ magnétique externe local, dit « plan de contrôle local », ledit procédé comportant des étapes de :

   - (52) mesure du champ magnétique externe local,
   - (54) détermination d'un couple magnétique à former dans le plan de contrôle local en fonction d'un couple de contrôle d'attitude souhaité suivant trois axes,
   - (56) commande des magnéto-coupleurs (24) de sorte à former, en coopération avec le champ magnétique externe local, le couple magnétique déterminé,

   **caractérisé en ce que** le couple magnétique à former dans le plan de contrôle local est déterminé en fonction de la composante du couple de contrôle d'attitude souhaité qui est orthogonale au plan de contrôle local, dite « composante localement incontrôlable », la contribution de ladite composante localement incontrôlable au couple magnétique à former étant non nulle lorsque ladite composante localement incontrôlable est non nulle.

2. Procédé (50) selon la revendication 1, **caractérisé en ce que** la contribution de la composante localement incontrôlable au couple magnétique à former dans le plan de contrôle local est déterminée en outre en fonction d'un modèle de variation temporelle de la direction du champ magnétique externe.

3. Procédé (50) selon l'une des revendications 1 à 2, **caractérisé en ce que**, le véhicule spatial (10) évoluant dans un plan orbital, la détermination du couple magnétique à former comporte l'expression de la variation souhaitée de moment angulaire dans un repère magnétique centré sur le véhicule spatial et défini par trois axes X, Y, Z : un axe X parallèle à la direction du champ magnétique externe local, un axe Y orthogonal à l'axe X et se trouvant dans un plan orthogonal au plan orbital, et un axe Z orthogonal aux axes X et Y.

4. Procédé (50) selon la revendication 3, **caractérisé en ce que**, le véhicule spatial (10) évoluant en orbite basse, le couple magnétique à former est déterminé, dans le repère magnétique, suivant une loi de contrôle s'exprimant sous la forme :

$$\mathbf{T}mag = -\begin{bmatrix} 0 & 0 & 0 \\ 0 & Ky & 0 \\ Kzx & 0 & Kz \end{bmatrix} \cdot \frac{\mathbf{T}cmd}{Kn}$$

expression dans laquelle :

- Tmag correspond au couple magnétique à former,
- Tcmd correspond au couple de contrôle d'attitude souhaité,
- Kn est un paramètre scalaire non nul homogène à une fréquence,
- Kzx, Ky et Kz sont des paramètres scalaires non nuls ou des fonctions de transfert non nulles homogènes à des fréquences.

5. Procédé (50) selon la revendication 4, **caractérisé en ce que**, le véhicule spatial (10) étant en orbite polaire (30) autour de la Terre (40), le paramètre scalaire Kzx s'exprime sous la forme :

$$Kzx = 2 \cdot \omega_0 \cdot \left( \left( \frac{\omega_{CL}}{2 \cdot \omega_0} \right)^2 - 1 \right)$$

expression dans laquelle :

- $\omega_0$ correspond à la fréquence orbitale du véhicule spatial,
- $\omega_{CL}$ correspond à la bande passante de dé-saturation souhaitée.

6. Procédé (50) selon l'une des revendications précédentes, **caractérisé en ce que**, le système de contrôle d'attitude comportant un dispositif de stockage (20) de moment angulaire, les magnéto-coupleurs (24) sont mis en oeuvre pour dé-saturer ledit dispositif de stockage par transfert de moment angulaire.

7. Procédé (50) selon la revendication 6, **caractérisé en ce que** le couple de contrôle d'attitude souhaité s'exprime sous la forme :

$$\mathbf{T}cmd = Kn \cdot \Delta\mathbf{H}$$

expression dans laquelle :

- **T**cmd correspond au couple de contrôle d'attitude souhaité,
- Kn est un paramètre scalaire non nul homogène à une fréquence,
- $\Delta\mathbf{H}$ correspond à une variation souhaitée du moment angulaire du dispositif de stockage (20).

8. Produit programme d'ordinateur, **caractérisé en ce qu'**il comporte un ensemble d'instructions de code de programme qui, lorsqu'elles sont exécutées par un processeur, mettent en oeuvre un procédé (50) de commande de magnéto-coupleurs selon l'une des revendications 1 à 7.

9. Système de contrôle d'attitude d'un véhicule spatial (10) destiné à être soumis à un champ magnétique externe de direction variable, ledit système de contrôle d'attitude comportant un dispositif de mesure (22) du champ magnétique externe local, des magnéto-coupleurs (24) adaptés à former, en coopération avec le champ magnétique externe local, des couples magnétiques dans un plan orthogonal à la direction dudit champ magnétique externe local, dit « plan de contrôle local », et une unité de commande (26) adaptée à déterminer un couple magnétique à former dans le plan de contrôle local en fonction d'un couple de contrôle d'attitude souhaité suivant trois axes, et à commander lesdits magnéto-coupleurs de sorte à former le couple magnétique déterminé, **caractérisé en ce que** l'unité de commande (26) est configurée pour déterminer le couple magnétique à former dans le plan de contrôle local en fonction de la composante du couple de contrôle d'attitude souhaité qui est orthogonale au plan de contrôle local, dite « composante localement incontrôlable », la contribution de ladite composante localement incontrôlable au couple magnétique à former étant non nulle lorsque ladite composante localement incontrôlable est non nulle.

10. Système de contrôle d'attitude selon la revendication 9, **caractérisé en ce que** le dispositif de mesure (22) est adapté à mesurer le champ magnétique externe local suivant trois axes.

11. Système de contrôle d'attitude selon l'une des revendications 9 à 10, **caractérisé en ce que** les magnéto-coupleurs (24) sont adaptés à former des moments magnétiques suivant trois axes.

**Patentansprüche**

1. Verfahren (50) zum Steuern von Magnetkopplern (24) eines Lagesteuersystems für ein Raumfahrzeug (10), das einem äußeren Magnetfeld mit veränderlicher Richtung unterworfen ist, wobei die Magnetkoppler betrieben werden, um die Lage des Raumfahrzeugs zu steuern, und dafür ausgelegt sind, in Zusammenwirkung mit dem lokalen äußeren Magnetfeld magnetische Drehmomente in einer Ebene senkrecht zu der Richtung des lokalen äußeren Magnetfelds, die "lokale Steuerebene" genannt wird, zu bilden, wobei das Verfahren die folgenden Schritte umfasst:

    - (52) Messen des lokalen äußeren Magnetfeldes,
    - (54) Bestimmen eines magnetischen Drehmoments, das in der lokalen Steuerebene zu bilden ist, als Funktion eines gewünschten Lagesteuerdrehmoments längs dreier Achsen,
    - (56) Steuern der Magnetkoppler (24) in der Weise, dass in Zusammenwirkung mit dem lokalen äußeren Magnetfeld das bestimmte magnetische Drehmoment gebildet wird,

    **dadurch gekennzeichnet, dass** das magnetische Drehmoment, das in der lokalen Steuerebene gebildet werden soll, als Funktion der Komponente des gewünschten Lagesteuerdrehmoments, die zu der lokalen Steuerebene senkrecht ist und "lokal nicht steuerbare Komponente" genannt wird, bestimmt wird, wobei der Beitrag der lokal nicht steuerbaren Komponente zu dem zu bildenden magnetischen Drehmoment von null verschieden ist, wenn die lokal nicht steuerbare Komponente von null verschieden ist.

2. Verfahren (50) nach Anspruch 1, **dadurch gekennzeichnet, dass** der Beitrag der lokal nicht steuerbaren Komponente zu dem zu bildenden magnetischen Drehmoment in der lokalen Steuerebene außerdem als Funktion eines Modells einer zeitlichen Veränderung der Richtung des äußeren Magnetfeldes bestimmt wird.

3. Verfahren (50) nach einem der Ansprüche 1 bis 2, **dadurch gekennzeichnet, dass** dann, wenn sich das Raumfahrzeug (10) in einer Orbitalebene bewegt, das Bestimmen des zu bildenden magnetischen Drehmoments den Ausdruck der gewünschten Veränderung des Drehimpulses in einem auf das Raumfahrzeug zentrierten magnetischen Bezugssystem, das durch drei Achsen X, Y, Z definiert ist: wobei die Achse X zu der Richtung des lokalen äußeren Magnetfeldes parallel ist, die Achse Y senkrecht zu der Achse X ist und sich in einer Ebene senkrecht zu der Orbitalebene befindet und die Achse Z zu den Achsen X und Y senkrecht ist, umfasst.

4. Verfahren (50) nach Anspruch 3, **dadurch gekennzeichnet, dass** dann, wenn sich das Raumfahrzeug (10) auf einer niedrigen Umlaufbahn bewegt, das zu bildende magnetische Drehmoment in dem magnetischen Bezugssystem gemäß einem Steuergesetz bestimmt wird, das die folgende Form hat:

$$Tmag = -\begin{bmatrix} 0 & 0 & 0 \\ 0 & Ky & 0 \\ Kzx & 0 & Kz \end{bmatrix} \cdot \frac{Tcmd}{Kn}$$

wobei in diesem Ausdruck:

- Tmag dem zu bildenden magnetischen Drehmoment entspricht,
- Tcmd dem gewünschten Lagesteuerdrehmoment entspricht,
- Kn ein von null verschiedener skalarer Parameter ist, der bei einer Frequenz homogen ist,
- Kzx, Ky und Kz von null verschiedene skalare Parameter oder von null verschiedene Übertragungsfunktionen, die bei Frequenzen homogen sind, sind.

**5.** Verfahren (50) nach Anspruch 4, **dadurch gekennzeichnet, dass** dann, wenn sich das Raumfahrzeug (10) in einer polaren Umlaufbahn (30) um die Erde (40) befindet, der skalare Parameter Kzx die folgende Form hat:

$$Kzx = 2\omega_0 \cdot \left( \left( \frac{\omega_{CL}}{2 \cdot \omega_0} \right)^2 - 1 \right)$$

wobei in dem Ausdruck:

- $\omega_0$ der Umlauffrequenz des Raumfahrzeugs entspricht,
- $\omega_{CL}$ dem gewünschten Entsättigungs-Durchlassband entspricht.

**6.** Verfahren (50) nach einem der vorhergehenden Ansprüche, **dadurch gekennzeichnet, dass** dann, wenn das Lagesteuersystem eine Speichervorrichtung (20) für den Drehimpuls enthält, die Magnetkoppler (24) betrieben werden, um die Speichervorrichtung durch Drehimpulsübertragung zu entsättigen.

**7.** Verfahren (50) nach Anspruch 6, **dadurch gekennzeichnet, dass** das gewünschte Lagesteuerdrehmoment die folgende Form hat:

$$Tcmd = Kn \cdot \Delta H$$

wobei in dem Ausdruck:

- Tcmd dem gewünschten Lagesteuerdrehmoment entspricht,
- Kn ein von null verschiedener skalarer Parameter ist, der bei einer Frequenz homogen ist,
- $\Delta H$ einer gewünschten Veränderung des Drehimpulses der Speichervorrichtung (20) entspricht.

**8.** Computerprogrammprodukt, **dadurch gekennzeichnet, dass** es eine Gesamtheit von Programmcodebefehlen enthält, die dann, wenn sie durch einen Prozessor abgearbeitet werden, ein Verfahren (50) zum Steuern von Magnetkopplern nach einem der Ansprüche 1 bis 7 ausführen.

**9.** Lagesteuersystem eines Raumfahrzeugs (10), das einem äußeren Magnetfeld mit veränderlicher Richtung unterworfen werden soll, wobei das Lagesteuersystem eine Vorrichtung (22) zum Messen des lokalen äußeren Magnetfeldes, Magnetkoppler (24), die dafür ausgelegt sind, in Zusammenwirkung mit dem lokalen äußeren Magnetfeld magnetische Drehmomente in einer Ebene senkrecht zu der Richtung des lokalen äußeren Magnetfeldes, die "lokale Steuerebene" genannt wird, zu bilden, und eine Steuereinheit (26), die dafür ausgelegt ist, ein in der lokalen Steuerebene zu bildendes magnetisches Drehmoment als Funktion eines gewünschten Lagesteuerdrehmoments längs dreier Achsen zu bestimmen und die Magnetkoppler in der Weise zu steuern, dass das bestimmte magnetische Drehmoment gebildet wird, umfasst, **dadurch gekennzeichnet, dass** die Steuereinheit (26) konfiguriert ist, das zu bildende magnetische Drehmoment in der lokalen Steuerebene als Funktion der Komponente des gewünschten Lagesteuerdrehmoments, die zu der lokalen Steuerebene senkrecht ist und "lokal nicht steuerbare Komponente" genannt wird, zu bestimmen, wobei der Beitrag der lokal nicht steuerbaren Komponente zu dem zu bildenden magnetischen Drehmoment von null verschieden ist, wenn die lokal nicht steuerbare Komponente von null verschieden ist.

10. Lagesteuersystem nach Anspruch 9, **dadurch gekennzeichnet, dass** die Messvorrichtung (22) dafür ausgelegt ist, das lokale äußere Magnetfeld längs dreier Achsen zu messen.

11. Lagesteuersystem nach einem der Ansprüche 9 bis 10, **dadurch gekennzeichnet, dass** die Magnetkoppler (24) dafür ausgelegt sind, magnetische Drehmomente längs dreier Achsen zu bilden.

**Claims**

1. A method (50) of command of magneto-torquers (24) of an attitude control system of a space vehicle (10) subjected to an external magnetic field of variable direction, said magneto-torquers being implemented so as to control the attitude of said space vehicle and being suitable for forming, in cooperation with the local external magnetic field, magnetic torques in a plane orthogonal to the direction of said local external magnetic field, referred to as the "local control plane", said method comprising steps of:

   - (52) measuring the local external magnetic field,
   - (54) determining a magnetic torque to be formed in the local control plane as a function of a desired three-axes attitude control torque,
   - (56) commanding the magneto-torquers (24) in such a way as to form, in cooperation with the local external magnetic field, the determined magnetic torque,

   **characterized in that** the magnetic torque to be formed in the local control plane is determined as a function of the component of the desired attitude control torque which is orthogonal to the local control plane, referred to as the "locally uncontrollable component", the contribution of said locally uncontrollable component to the magnetic torque to be formed being non-zero when said locally uncontrollable component is non-zero.

2. The method (50) as claimed in claim 1, **characterized in that** the contribution of the locally uncontrollable component to the magnetic torque to be formed in the local control plane is furthermore determined as a function of a model of temporal variation of the direction of the external magnetic field.

3. The method (50) as claimed in one of claims 1 to 2, **characterized in that**, the space vehicle (10) progressing in an orbital plane, the determination of the magnetic torque to be formed comprises the expression of the desired variation of angular momentum in a magnetic reference frame centered on the space vehicle and defined by three axes X, Y, Z: an axis X parallel to the direction of the local external magnetic field, an axis Y orthogonal to the axis X and situated in a plane orthogonal to the orbital plane, and an axis Z orthogonal to the axes X and Y.

4. The method (50) as claimed in claim 3, **characterized in that**, the space vehicle (10) progressing in low orbit, the magnetic torque to be formed is determined, in the magnetic reference frame, according to a control law expressed in the form:

$$\mathbf{T}mag = - \begin{bmatrix} 0 & 0 & 0 \\ 0 & Ky & 0 \\ Kzx & 0 & Kz \end{bmatrix} \cdot \frac{\mathbf{T}cmd}{Kn}$$

in which expression:

   - $\mathbf{T}$mag corresponds to the magnetic torque to be formed,
   - $\mathbf{T}$cmd corresponds to the desired attitude control torque,
   - Kn is a non-zero scalar parameter dimensionally equivalent to a frequency,
   - Kzx, Ky and Kz are non-zero scalar parameters or non-zero transfer functions dimensionally equivalent to frequencies.

5. The method (50) as claimed in claim 4, **characterized in that**, the space vehicle (10) being in polar orbit (30) around the Earth (40), the scalar parameter Kzx is expressed in the form:

$$Kzx = 2 \cdot \omega_0 \cdot \left( \left( \frac{\omega_{CL}}{2 \cdot \omega_0} \right)^2 - 1 \right)$$

in which expression:

- $\omega_0$ corresponds to the orbital frequency of the space vehicle,
- $\omega_{CL}$ corresponds to the desired desaturation bandwidth.

6. The method (50) as claimed in one of the preceding claims, **characterized in that**, the attitude control system comprising an angular momentum storage device (20), the magneto-torquers (24) are implemented so as to desaturate said storage device by transfer of angular momentum.

7. The method (50) as claimed in claim 6, **characterized in that** the desired attitude control torque is expressed in the form:

$$\mathbf{T}cmd = Kn \cdot \Delta\mathbf{H}$$

in which expression:

- **T**cmd corresponds to the desired attitude control torque,
- Kn is a non-zero scalar parameter dimensionally equivalent to a frequency,
- $\Delta\mathbf{H}$ corresponds to a desired variation of the angular momentum of the storage device (20).

8. A computer program product, **characterized in that** it comprises a set of program code instructions which, when they are executed by a processor, implement a method (50) of command of magneto-torquers as claimed in one of claims 1 to 7.

9. An attitude control system of a space vehicle (10) intended to be subjected to an external magnetic field of variable direction, said attitude control system comprising a device (22) for measuring the local external magnetic field, magneto-torquers (24) suitable for forming, in cooperation with the local external magnetic field, magnetic torques in a plane orthogonal to the direction of said local external magnetic field, referred to as the "local control plane", and a command unit (26) suitable for determining a magnetic torque to be formed in the local control plane as a function of a desired three-axes attitude control torque, and to command said magneto-torquers so as to form the determined magnetic torque, **characterized in that** the command unit (26) is configured to determine the magnetic torque to be formed in the local control plane as a function of the component of the desired attitude control torque which is orthogonal to the local control plane, referred to as the "locally uncontrollable component", the contribution of said locally uncontrollable component to the magnetic torque to be formed being non-zero when said locally uncontrollable component is non-zero.

10. The attitude control system as claimed in claim 9, **characterized in that** the measurement device (22) is suitable for measuring the local external magnetic field in relation to three axes.

11. The attitude control system as claimed in one of claims 9 to 10, **characterized in that** the magneto-torquers (24) are suitable for forming magnetic moments in relation to three axes.

Fig.1

Fig.2

Fig.3

Fig.4a

Fig.4b

Fig.4c

**EP 2 914 497 B1**

## RÉFÉRENCES CITÉES DANS LA DESCRIPTION

**Documents brevets cités dans la description**

- US 7376496 B